# EUROPEAN PATENT APPLICATION

(11) **EP 1 199 677 A2**
(43) Date of publication of application: **24.04.2002**
(21) Application number: 01122709.7
(22) Date of filing: 21.09.2001
(51) Int. Cl.: G06K 15/02

(54) **Printing system with data backup for paper jam recovery**

(30) Priority: 20.10.2000 JP 2000320725
(71) Applicant: International Business Machines Corporation, Armonk, NY 10504 (US)
(72) Inventor: Irie, Toshiya, Yokohama-shi, Kanagawa-ken, 244-0003 (JP); Kudoh, Takuji, Hatano-shi, Kanagawa-ken, 257-0006 (JP); Watanabe, Kiyoshi, Yamato-shi, Kanagawa-ken, 242-0002 (JP)
(74) Representative: Klein, Hans-Jörg

(57) **Abstract**

A printing system comprises a printing apparatus 10 for performing printing and a jam recovery user interface section 30 connected to the printing apparatus 10 to perform given directions, wherein the printing apparatus 10 comprises a data analysis section 13 that expands print data 9 to bit mapped images, an expanded bit image data store section 14 that stores data based on identification information for each page, and an expanded bitmap data printing section 20 that prints bit mapped images on media, and the jam recovery user interface section 30 comprises a page bit image display section 32 that displays bitmapped images output from the printing apparatus 10 and a recovery target page specifying section 33 that receives a direction from a user and outputs identification information corresponding to a specified page to the printing apparatus 10.

## Description

### Field of the Invention

The present invention relates to a printing apparatus for performing print operations based on given print directions, and more particularly to a printing apparatus for performing recovery from troubles such as paper jams of recording sheets on which image data are printed.

### Background Art

A printing apparatus such as a laser printer which is a typical high speed printer rasterizes print data received from a host computer to expand them to bitmapped images, which are then printed out on recording sheets by a printer engine. For a mass printing job as seen in basic affairs, the printing job is often performed in batch processing by a host computer, and it is not uncommon that the amount of printing by the printing apparatus reaches to thousands of or tens of thousands of pages.

When a paper feed error occurs during the execution of such a job (printing job), a requisite process is to recover from the error. In the conventional process, manual recovery from the error is done by a user, then a starting page for re-printing is determined by either the printing apparatus or the host computer that has performed the batch processing, and then the re-printing is automatically started.

However, when a paper feed error occurs and thereafter a user recovers from the error by, for example, removing a jamming sheet of paper, there may be the case where some sheets are significantly damaged even if they are not considered to be in error by a printing system. For example, a sheet may be considered to be in error due to a damage such as stains on the sheet due to unwanted toners, folds or creases, skew, etc. Furthermore, upon recovering from the error, even a sheet which has been normally completed in printing may assume a condition which is considered to be in error as stated above, due to false handling by the user. For example, upon recovering from the error, sheets normally printed may be adversely affected due to the open/close operations of a paper feed tray, paper discharging stacker, and/or cover. If such pages happen which need re-printing despite the printing system does not consider them as targets of re-printing when an error occurs, there would be no effective solution other than printing again from the beginning, in a mission-critical batch job environment. For example, in a printing job of 100,000 pages, if an error occurs at the 90,000th page, it would be required to print again from the beginning so that the printing cost and time for the first try of 90,000 pages would be wasted.

Japanese Unexamined Patent Publication No. 10-269036 discloses a re-printing technique in which print data are preserved in a printer if preservation is specified in the print data wherein a user may request a transfer of an attribute information list file for the preserved files via a Web browser when the user desires re-printing. The user selects a file to be displayed based on this attribute information list file received from a Web server, then confirms a printing image of the preserved file selected, and directs the re-printing. However, with the technique disclosed in the above publication, a unit of processing for the preservation and re-printing is on a job (file) basis rather than a page basis. As a result, for a single job with a huge amount of print pages, futile re-printing would occur as described above.

Japanese Unexamined Patent Publication No. 7-61061 discloses a technique in which print image data are stored in a printer in the form of raster scan data and then printed out, and at least one page of printed raster scan data is left in a specific area of a memory. If a problem such as paper jam occurs thereafter, re-printing is performed using the raster scan data left in the memory, whereby no retransmission direction for printed image data from the host computer is required. However, with this technique, it is difficult to indicate, in the event of error occurrence, which page the re-printing should be started from when the halted printer performs the re-printing. This technique requires a user to calculate and indicate which previous page, counting from a page where a paper discharge has been completed, the re-printing should be started from. Namely, in order to make a successful recovery, the user would have to know the detailed page configuration of the print job before the printing is started. Also, it would be practically difficult to specify a correct starting page to be re-printed if complex commands are involved before the rasterization, e.g., 10 copies of a specific page are to be made.

### Summary of the invention

The present invention is proposed to solve the above-mentioned technical problems. Therefore, an object of the invention is to allow a re-printing operation to be started from a desired page upon recovering from an error such as a paper transport failure and re-printing in a printer.

It is another object of the invention to allow a user to immediately confirm printing order and print images of printed materials in detail.

It is a further object of the invention to store bitmapped images on a page basis and to specifically indicate viewing and pages to be re-printed so that real-time directions for displaying and recovering a failed page are made possible even in the course of job processing when an error occurs.

In order to accomplish these and other objects, the present invention compresses and stores bitmapped images for each page in parallel with print processing by a printing apparatus, and immediately decompresses images near a failed page and display them on a display device associated with the printing apparatus when an error such as paper jam occurs so that a starting page for re-printing is visually confirmed and specifically indicated by a user. Furthermore, the order of pages and, in the case of duplex printing, the front and back sides thereof are accurately confirmed after printing. Namely, the printing apparatus according to the present invention comprises means for storing input or expanded bitmapped images with each page thereof being identified, means for printing the input or expanded bitmapped images on a medium, and means for reading and displaying the stored bitmapped images based on the page identification in the storing means during or after print operations of the printing means.

The printing apparatus may further comprise means for detecting a failure of a feed/transport system for the medium printed by the printing means, wherein the reading means may read and output selected bitmapped images based on the page identification for a page that is recognized by the detecting means not to have been printed normally due to the failure of the feed/transport system.

The storing means may store the bitmapped images with page IDs which identify the bitmapped images by page. This preferably allows efficient error handling to be achieved even when multiple jobs are mixed or when a single job deals with a huge amount of works such as printing of 10,000 pages.

The printing apparatus may further comprise means for displaying the bitmapped images output by the reading means, and means for specifying a starting page for printing among the bitmapped images displayed by the displaying means, wherein the printing means may perform printing from a selected page based on the page identification determined by the specifying means. These displaying and specifying means may be provided in a housing of the printing apparatus in the form of, for example, a control panel comprised of an LCD panel equipped with touch panel functions, or they may be connected to the printing apparatus and a broad "printing apparatus" may be defined to include an associated computing device such as a personal computer in addition to these means. Alternatively, the "printing apparatus" may be defined to include a remote computer connected to the network.

The printing apparatus may further comprise means for stacking the media printed by the printing means, wherein the specifying means specifies a page necessary for recovering a correct order of pages when the order of pages of the media stacked by the stacking means gets out of order.

The displaying means may display the bit mapped images with indication that the bitmapped image is printed on a front side or back side of a medium, and the specifying means may specify that the printing on the front side or back side of the medium according to the displaying means is changed.

In another aspect of the invention, a printing apparatus comprises means for expanding input data to bitmapped images, means for storing the bitmapped images expanded by the expanding means, means for printing the bitmapped images expanded by the expanding means on a medium, means for detecting an error occurred when the bitmapped images are printed on the medium by the printing means, means for reading from the storing means and displaying selected bitmapped images in response to error detection by the error detecting means, and means responsive to a request from a user for causing the printing means to print on the medium starting from a specified bitmapped image.

In a further aspect, the present invention provides a print directing apparatus connected to a print section and directing the print section to print, wherein the print section prints bitmapped images on a medium, the apparatus comprising means for receiving page bit images for specific pages from the print section along with page identification information identifying each page printed, means for displaying the page bit images received by the receiving means, means for specifying a page to be printed in the print section among the page bit images displayed by the displaying means, and means for outputting the page identification information for the page specified by the specifying means to the print section.

The receiving means may receive from the print section the page bit images related to an error occurred in the print section, and the displaying means may display the page bit images related to the error with predetermined error indication such as highlighting, whereby a page is clearly indicated for the user which is most likely to be a starting page for re-printing and needs confirmation.

The receiving means may receive the page identification information and the page bit images from the print section via the Internet, whereby it is possible to confirm the error and direct to resume printing at a place away from the print section, e.g., a printer engine or printing apparatus.

The print directing apparatus may further comprise means for directing scrolling to display pages before or after the page bit images displayed by the displaying means, wherein the receiving means may sequentially receive the page bit images related to the scrolling direction from the directing means, and wherein the displaying means may sequentially display the page bit images sequentially received by the receiving means, whereby the user may resume printing after confirming by the displaying means even for the pages which have been determined by the print section that the printing had completed normally.

The present invention further provides a printing system comprising a printing apparatus for printing on a medium and a displaying and directing apparatus connected to the printing apparatus for issuing given directions to the printing apparatus, wherein the printing apparatus comprises a rasterizer for expanding input print data to bitmapped images, a memory for storing the bitmapped images expanded by the rasterizer based on page identification information, and an engine for printing the bitmapped images expanded by the rasterizer on a medium, and the displaying and directing apparatus comprises a display for displaying selected bitmapped images output from the printing apparatus, and a target page specifying section for allowing a user to specify a particular bitmapped image among the selected bitmapped images displayed and outputting the identification information corresponding to the page of the particular bitmapped image to the printing apparatus.

The displaying and directing apparatus may comprise a scroll directing section for directing page by page scrolling of the bitmapped images displayed on the display, and the display may display selected bitmapped images received from the printing apparatus based on the direction from the scroll directing section. Hereby, the displaying and directing apparatus can display the bitmapped images already expanded only by reading them without performing any bitmap expansion, which allows a specified page to be immediately displayed to the user.

In a further aspect, the present invention provides a printing system comprising a printing apparatus for producing page bit images by rasterizing input data, and printing the produced page bit images on a medium such as a sheet of paper, and a displaying and directing apparatus connected to the printing apparatus for displaying selected images and issuing given directions to the printing apparatus, wherein the printing apparatus stores the rasterized page bit images in a memory, and reads from the memory and outputs to the displaying and directing apparatus selected page bit images upon occurrence of an error, and the displaying and directing apparatus displays selected page bit images output from the printing apparatus, and issues a re-print direction to the printing apparatus by specifying a particular page bit image among the selected page bit images displayed.

In a further aspect, the present invention provides a re-printing method comprising the steps of storing input or expanded bitmapped images based on page identification information, printing the input or expanded bitmapped images on a medium, displaying selected bitmapped images page by page among the stored bitmapped images in response to a direction or indication such as error detection (e.g., jam error occurred during printing on the medium), confirm direction from a user, or scroll direction from the user, accepting, on a page basis, a re-print direction from the user for the selected bitmapped images displayed, and performing re-print processing based on the identification information of the bitmapped image for which the re-print direction has been accepted on a page basis.

The step of displaying the selected bitmapped images page by page may indicate whether the image of each page is to be printed on the front side or back side of the medium. This is preferable because the user can confirm in the duplex printing whether the printing has been performed correctly on the front and back sides of the medium actually output.

### Brief Description of the Drawings

Fig. 1 is a block diagram showing an entire configuration of the printing system according to the present invention.
Fig. 2 is a flowchart showing a process flow in the printing system according to the present invention.
Fig. 3 illustrates the contents of information managed in the page ID monitor and control section 50.
Fig. 4(a) through (c) illustrate the states and contents of processing states (PRC) 56, location information (LOC) 57, and jam error information (ERR) 58.
Fig. 5 illustrates an exemplary control state of the page ID monitor and control section 50 at the time of paper jam.
Fig. 6(a) and (b) illustrate exemplary states of page bit images displayed on the display 71.

### Detailed description of Preferred Embodiments

Now the present invention will be described with reference to the accompanying drawings.

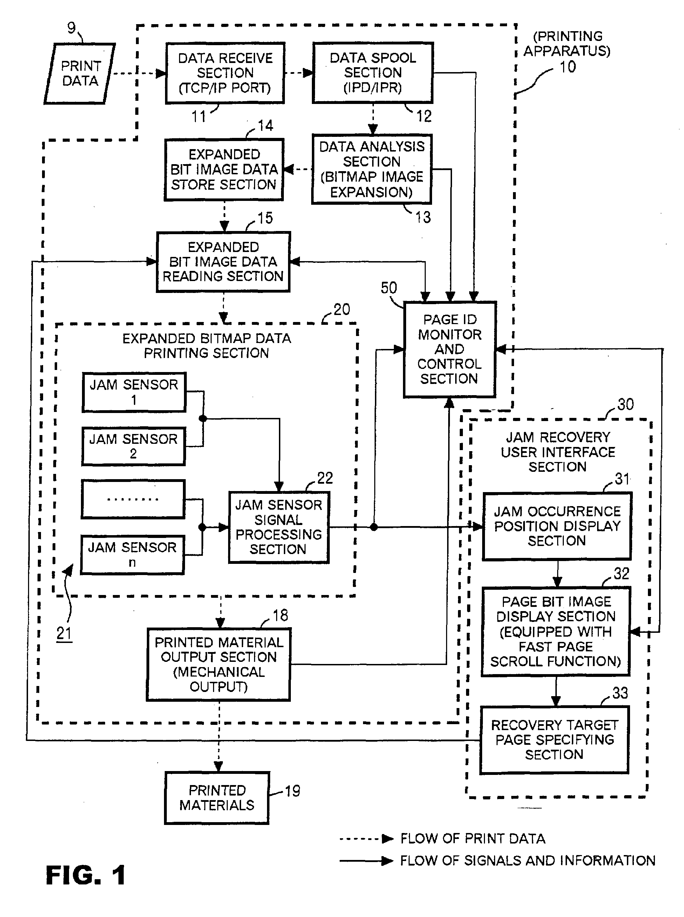

Fig. 1 is a block diagram showing an entire configuration of a printing system according to the preferred embodiment of the present invention. This printing system consists of a printing apparatus or printer 10 and a jam recovery user interface section 30 using a computing device. Print data 9 are transferred to the printing apparatus 10 in the form of command data from a host computer (not shown) which generates the print data 9. The printing apparatus 10 comprises a data receive section 11, a data spool section 12, a data analysis section 13, an expanded bit image data store section 14, and an expanded bit image data reading section 15. The printing apparatus 10 outputs printed materials 19 through an expanded bitmap data printing section 20 serving as an engine and a printed material output section 18 which is a mechanical output section. The printing apparatus 10 is also provided with a page ID monitor and control section 50. Though the printing apparatus 10 is shown to be comprised of the data receive section 11, data spool section 12, data analysis section 13, expanded bit image data store section 14, expanded bit image data reading section 15, and page ID monitor and control section 50, these functions may be implemented in a different housing or case separate from the one including the expanded bitmap data printing section 20 and the printed material output section 18, and the transfer of bitmapped image data and communication with the page ID monitor and control section 50 may be performed over a network or a predetermined line.

As the present embodiment assumes a network printer, the data receive section 11 functions, for example, as a TCP/IP port which receives text data by means of file transfer under the TCP/IP protocol. The data spool section 12 stores text data received by the data receive section 11. When the data are received under the protocol of LPD (line printer daemon) or LPR (line printer requester), each of which is an application of TCP/IP, the data are stored in the respective formats. The state of data stored in the data spool section 12 is sent to the page ID monitor and control section 50, and the state of data stored as text data is also monitored by the page ID monitor and control section 50. The data analysis section 13 is a rasterizer which expands the text data stored in the data spool section 12 to bitmapped images. Namely, it converts data in the command format to page bit images having a format similar to the one consisting of 1's and 0's. The state of the data analysis section 13 is also monitored by the page ID monitor and control section 50.

The expanded bit image data store section 14, which may be a hard disk drive, stores the bitmapped images converted by the data analysis section 13 with the images being compressed as needed. For example, high resolution bitmapped images may contain 1 to 2 megabytes of data or more per page, so that it is effective to compress them for storage. According to the present embodiment, when data are stored in the expanded bit image data store section 14, a unique page ID is given for each page. Also, the bitmapped images which have already been printed remain stored. Therefore, when a paper transport failure (e.g., jam) or error which needs re-printing occurs, the stored images can be output to a display device such as an attached console for page display. Thus, according to the present embodiment, it is possible to immediately read the rasterized page bit images from the expanded bit image data store section 14 for visual presentation. It is also possible to start re-printing from a selected page based on the page ID, in response to a re-print direction from the user.

The expanded bit image data reading section 15 reads page bit images stored in the expanded bit image data store section 14 in synchronization with the print timing in the expanded bitmap data printing section 20 and outputs to the expanded bitmap data printing section 20. If the page bit images have been stored in the compressed form in the expanded bit image data store section 14, decompression is performed at that time. Operations performed by the expanded bit image data reading section 15 are monitored by the page ID monitor and control section 50, and the page bit images are output to a display device such as a console panel in the jam recovery user interface section 30 according to a direction from the page ID monitor and control section 50. Also, when a re-print direction is issued from the user, a page bit image corresponding to a specified page ID is read from the expanded bit image data store section 14.

The expanded bitmap data printing section 20 is, for example, an engine for a high speed laser printer, and is provided with an image recording section (including laser exposure section, developing section, transfer section, fixing section, etc.) and a paper transport section, both of which are not shown. The paper transport section contains multiple jam sensors 21 and a jam sensor signal processing section 22. The number of jam sensors 21 may be 10 to 20, which are disposed in the transport section at, for example, paper feed section, registration section, print section, transport section for duplex printing, and paper discharge section so that the jam sensor signal processing section 22 can immediately recognizes a paper feed error, where a transport failure occurred, and so on. Furthermore, the jam sensor signal processing section 22 always monitors transport timing to recognize up to what page the sheets are left in the machine of the expanded bitmap data printing section 20 when a paper jam occurs. Information on such paper jam and pages which have not been output is sent to the page ID monitor and control section 50. Also, when a transport failure such as paper jam occurs, its information is output to the jam recovery user interface section 30.

The printed material output section 18 stacks printed materials 19 output from, for example, a fixing section of a laser printer. The printed material output section 18 monitors whether the printed materials 19 are normally output using a jam sensor 21 provided at the paper discharge section, and sends a normal output completion signal to the page ID monitor and control section 50 when it outputs normally. The printed material output section 18 may comprise a plurality of bins and a post-processing facility such as a stacker for sorting, stacking, stapling and punching the output sheets.

The jam recovery user interface section 30 comprises a jam occurrence position display section 31, a page bit image display section 32, and a recovery target page specifying section 33. This may be a personal computer installed near a printer having the expanded bitmap data printing section 20, including a display for displaying page bit images, a pointing device for pointing to a displayed page bit image and scrolling the display screen, and a keyboard. The computer may be connected to a network to provide such functions, rather than installed near the printing apparatus 10.

The jam occurrence position display section 31 of the jam recovery user interface section 30 displays a page at which a paper jam has occurred by highlighting it, for example, by distinguishing the page by red. For a user, however, pages which have not been output normally would be more important than a page causing a jam. Therefore, such pages that are determined by the printing apparatus not to have been output normally may be highlighted. The page bit image display section 32 is equipped with a fast page scroll function which allows forward or backward page scrolling to be done by a scroll direction from the user when, for example, two pages are displayed on the display. The recovery target page specifying section 33 specifies pages to be re-printed by, for example, pointing to a selected page displayed by the page bit image display section 32 using a pointing device. Namely, the jam recovery user interface section 30 serving as a client communicates bidirectionally with the printing apparatus 10 serving as a server in accordance with a predetermined protocol, thereby receiving necessary page bit images directly or over the network, and immediately displaying the page bit images visually on the screen of the page bit image display section 32.

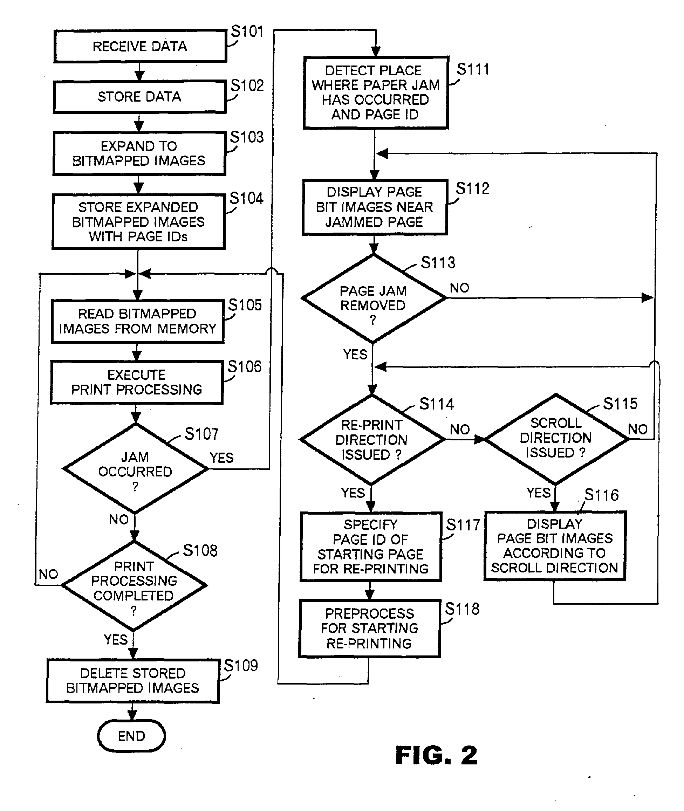

Fig. 2 is a flowchart of processing performed in the printing system according to the present invention. First, the print data 9 which are command data are received by the data receive section 11 (step 101). The print data 9 are stored in the data spool section 12 as they are, i.e. in the form of command data (step 102). Thereafter, the print data 9 are rasterized and expanded to bitmapped images by the data analysis section 13 (step 103). Then, the expanded bitmapped images are stored in the expanded bit image data store section 14 as page bit images with page IDs appended thereto (step 104).

Next, the bitmapped images stored in the expanded bit image data store section 14 are read by the expanded bit image data reading section 15 in synchronization with the timing of print processing performed in the expanded bitmap data printing section 20 (step 105). Thereafter, the expanded bitmap data printing section 20 performs print processing (step 106). Then, it is checked by the jam sensor signal processing section 22 whether a paper jam has occurred (step 107). If no jam has occurred, it is checked whether the print processing has been completed (step 108). If not, the flow goes back to step 105 and repeats the above processing. If the print processing has been completed, the bitmapped images stored in the expanded bit image data store section 14 are deleted (step 109), and the flow ends. Note that though in step 107 it is checked whether a pager jam has occurred, any errors other than a paper jam may also be checked. Furthermore, in step 109, the bitmapped images stored in the expanded bit image data store section 14 may be deleted in response to a direction from a user.

If it is determined in step 107 that a paper jam has occurred, a place where the paper jam has occurred and a page ID of the page data that has suffered a damage from the paper jam are detected by the page ID monitor and control section 50 (step 111). Then, based on the detected page ID, page bit images near the jammed page are read out from the expanded bit image data store section 14 by the expanded bit image data reading section 15, and displayed by the jam occurrence position display section 31 and the page bit image display section 32 of the jam recovery user interface section 30 (step 112). Then, it is checked whether the pager jam has been manually removed by a user (step 113). If not, the flow goes back to step 112, otherwise, it is checked whether a re-print direction is issued (step 114).

If no re-print direction is issued, it is then checked whether a scroll direction is issued from a user (step 115). If not, the flow goes back to step 112. Otherwise, according to the scroll direction, corresponding page bit images are read out from the expanded bit image data store section 14 by the expanded bit image data reading section 15, and the specified page bit images are displayed by the page bit image display section 32 (step 116). Then, the flow goes back to step 114 to wait for a re-print direction. If the re-print direction is detected in step 114, a page ID of a starting page for re-printing is identified by the recovery target page specifying section 33 (step 117). Then, preprocessing for starting re-printing, such as deleting data left in the expanded bitmap data printing section 20 is performed (step 118), and re-printing is started from step 105.

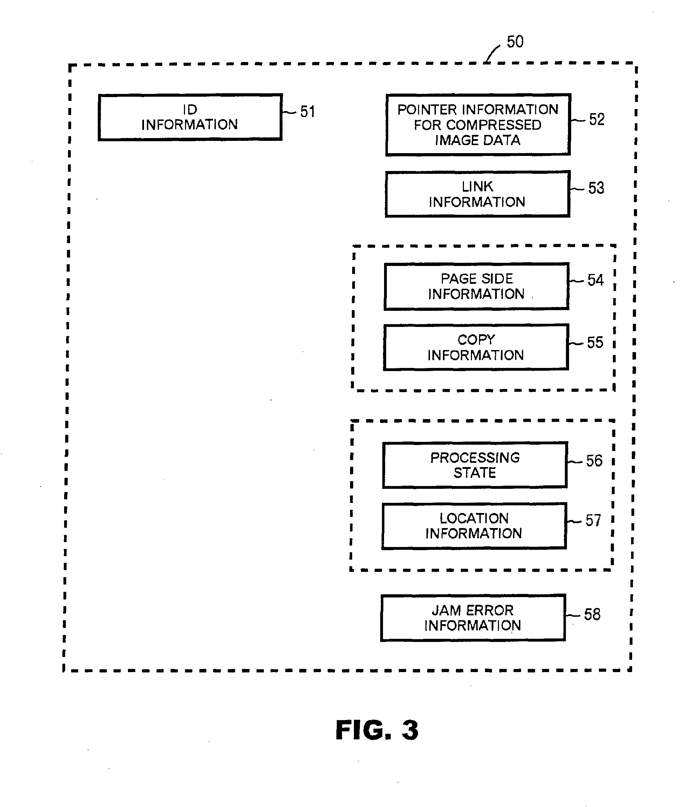

Fig. 3 illustrates the contents of information managed by the page ID monitor and control section 50. What are managed by this page ID monitor and control section 50 include ID information 51 provided for each print page. A total of, for example, 10,000 buffers of information (i.e., 10,000 pages of information) may be retained based on the ID information 51. When duplex printing is performed, different Ids are given to the front and back sides of the medium, respectively. Similarly, when the same print information is copied on multiple pages, different IDs are given to the respective copies. The page ID monitor and control section 50 also manages pointer information for compressed image data 52 pointing to compressed bitmapped image data stored in the expanded bit image data store section 14, and link information 53 including pointer values for preceding and succeeding pages. The link information 53 allows the preceding and succeeding pages to be extracted and displayed by the page bit image display section 32.

Also managed by the page ID monitor and control section 50 are page side information 54 for identifying a single side in simplex printing, or front or back side in duplex printing, copy information 55 for indicating no copy or a page number being currently copied, current processing state 56, current location information 57, and jam error information 58.

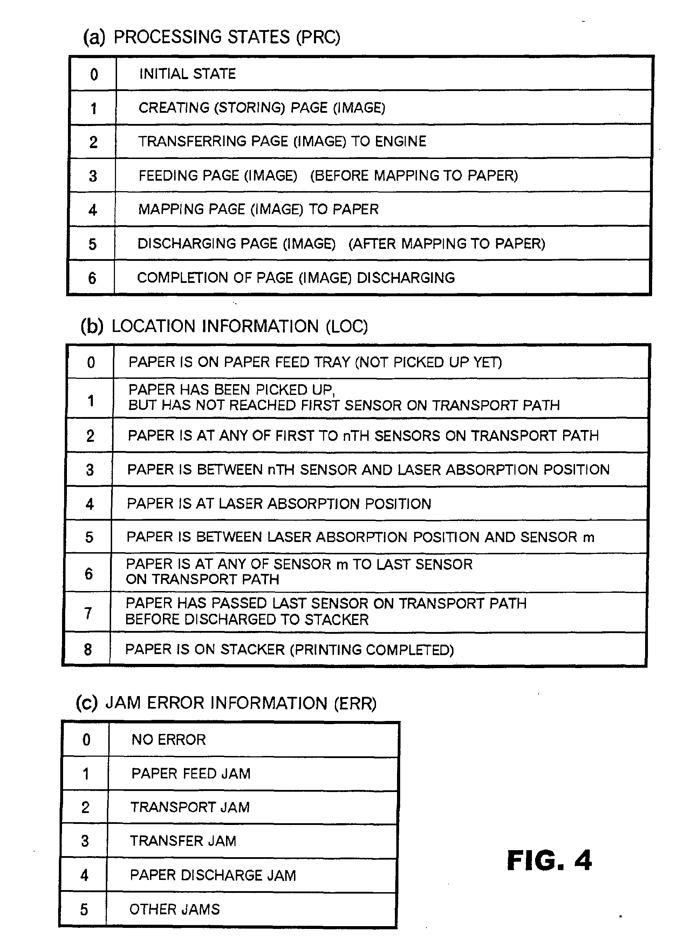

Fig. 4(a)-(c) illustrate the contents of processing states (PRC) 56, location information (LOC) 57, and jam error information (ERR) 58, respectively. The processing states (PRC) 56 shown in Fig. 4(a) are classified into seven states 0 through 6 to be managed. According to the present embodiment, state 0 is an initial state, state 1 is creating (storing) page (image), state 2 is transferring page (image) to engine, state 3 is feeding page (image) (before mapping to paper), state 4 is mapping page (image) to paper, state 5 is discharging page (image) (after mapping to paper), and state 6 is completion of page (image) discharging. These processing states 56 are managed for each ID information 51.

The location information (LOC) 57 shown in Fig. 4(b) are classified into nine states 0 through 8 to be managed depending on where a medium (paper) is located. State 0 indicates paper is on a paper feed tray (not picked up yet), state 1 indicates paper has been picked up, but has not reached the first sensor on the transport path, state 2 indicates paper is at any of the first to nth sensors on the transport path, state 3 indicates paper resides somewhere between the nth sensor and laser absorption position (transfer position) on the transport path, state 4 indicates paper is at the laser absorption position (transfer position), state 5 indicates paper resides somewhere between the laser absorption position and sensor m on the transport path, state 6 indicates paper is at any of the sensor m to the last sensor on the transport path, state 7 indicates paper has passed the last sensor on the transport path before discharged to a stacker, and state 8 indicates paper is on the stacker (printing completed).

The jam error information (ERR) 58 shown in Fig. 4(c) are classified into six states 0 through 5 to be managed, which indicate no error, paper feed jam, transport jam, transfer jam, paper discharge jam, and other jams, respectively. The jam error information is managed based on the states detected by the respective sensors in the expanded bitmap data printing section 20.

In addition, according to the present embodiment, two stages are defined for updating (adding and discarding) page IDS. The first stage is to add page IDs, and the second stage is to discard page IDs. The first stage for adding the page IDS is performed in the expanded bit image data store section 14. Normally, the second stage for discarding the page IDs is not performed. They are updated only when a parameter area used as a ring buffer wraps around (i.e., the oldest page ID structure is overwritten when 10,000 buffers are exhausted) and when the printer is restarted.

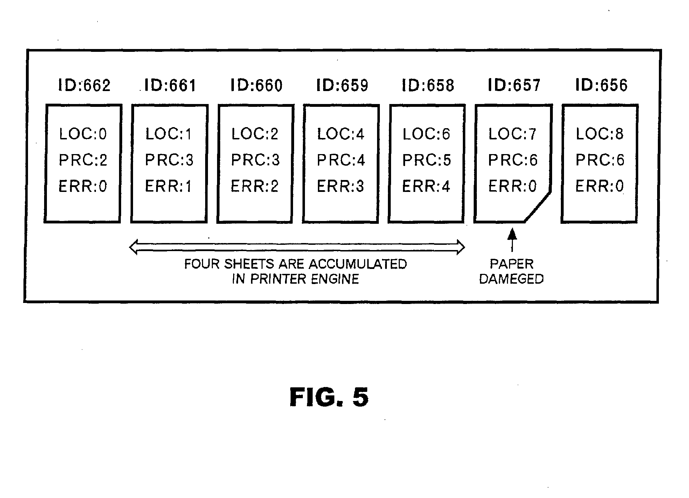

Fig. 5 depicts an example of management by the page ID monitor and control section 50 upon occurrence of a paper jam. It is assumed that up to four pages of paper can be accumulated in the expanded bitmap data printing section 20 serving as a printer engine, and simplex or single-sided printing is performed. Fig. 5 illustrates the states of seven pages identified by the ID information 51 (ID:656 through ID:662), wherein four pages (sheets) corresponding to ID:658 through ID:661 are accumulated in the printer engine. These four sheets of ID:658 through ID:661 are managed as targets for the jam error. Based on the managed states, the page ID monitor and control section 50 reads out a bitmapped image for ID:658 from the expanded bit image data store section 14, has the image displayed by the page bit image display section 32, and inquires a recovery position of a user (operator). If the user desires to recover a page of ID:657 in addition to the displayed page of ID:658 because a corresponding sheet of paper was found to be damaged (e.g., folded) when the jam was removed from the printer, the user could request the jam recovery user interface section 30 to display the preceding page of ID:657. In response to this request, the page ID monitor and control section 50 reads out a bitmapped image of ID:657 from the expanded bit image data store section 14 and has the image displayed by the page bit image display section 32. Thus, the user can issue a re-print direction for the page of ID:657.

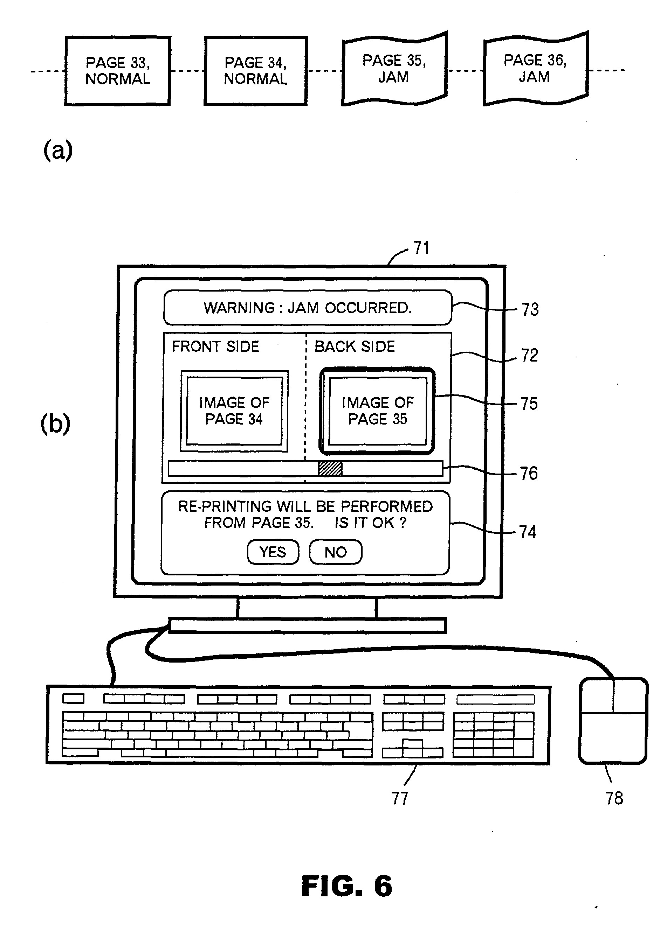

Fig. 6(a) and (b) show exemplary states of page bit images displayed on the display 71. Fig. 6(a) shows the states of the respective pages when a paper jam occurred, while Fig. 6(b) shows the display screen according to the jam recovery user interface section 30. The apparatus shown in Fig. 6(b) may be directly connected to and placed near the printing apparatus 10, or may be located away from the printing apparatus 10 over a network.

In Fig. 6(a), it is assumed that the printing apparatus 10 has printed out normally up to page 34 and that a paper jam has occurred on and after page 35 so that they have not been printed out normally. On the display 71 shown in Fig. 6(b), page bit images 72 are displayed along with a warning message 73 such as "Jam occurred." and re-print specifying message 74 such as "Re-printing will be performed from page 35. Is it OK?". Furthermore, highlighting 75 with, for example, a red frame is applied to page 35 which is considered to be a place where a paper jam has occurred in the printing apparatus 10. A scroll direction indicator or scroll bar 76 is also provided, which allows preceding and succeeding pages to be displayed by a user operation with a keyboard 77 or mouse 78. Additionally, the page bit image of each page is displayed with side identification which indicates whether the printing is performed on the front side or back side of a paper medium. In Fig. 6(b), a label "front side" or "back side" is provided to each page bit image.

It is now assumed that page 34 and page 33 are also stained and thus unsuitable for printed materials, though a user recognized that a paper jam had actually occurred at page 35 as detected by the printing apparatus 10. Then, the user manipulates the scroll bar 76 by, for example, the mouse 78 to display the images of page 33 and page 32. The user confirms the stained page 33 which was actually output and the clean page 32 which needs no re-printing, and specifies page 33 as a starting page for re-printing, using the mouse 78 or keyboard 77. The user confirms re-printing be started from page 33 with reference to the re-print specifying message 74, and then directs re-printing using the mouse 78 or keyboard 77. The printing apparatus 10 can now start re-printing from page 33. Though the embodiment shown in Fig. 6(b) uses the display 71, keyboard 77, and mouse 78 of a personal computer, the printing apparatus 10 may be provided with a control panel having a large LCD serving as a touch panel, and the directions may be issued by pressing corresponding display portions on the LCD.

The present embodiment may also recover the correct order of pages when pages are stacked out of order in the stacking facility (or stacker) in addition to the error processing with respect to the paper feed/transport system due to paper jam or the like. For example, the user may issue a direction using the mouse 78 or keyboard 77 to start printing from a page where the order was disturbed. If the stacker has a plurality of (e.g., twenty) stack bins to sort printed materials, a bin number may be displayed together with each page bit image 72 on the display 71, which indicates a bin where a printed page is to be stacked. The user may resume printing by newly selecting a bin or bins for paper discharging depending on such bin numbers and actual stack conditions.

As described above, the present embodiment can indicate whether the front side or back side of a sheet of paper is to be printed. It is also possible to change the side to be printed using the mouse 78 or keyboard 77. According to such an arrangement, the user can specify or change the side of paper to be printed while actually viewing page screens and confirming output pages.

Thus, according to the present embodiment, when a paper transport error such as a paper jam or a paper stacking (i.e., storing printed sheets in order) error has occurred, a page position at which the error has occurred can be recognized based on the jam sensors 21 provided in the expanded bitmap data printing section 20. Note that the page bit images used for confirmation are not the data before image conversion, but bitmapped images after rasterization. Thus, the page bit image corresponding to the recognized page position can be immediately displayed on the display of the jam recovery user interface section 30 attached to or connected via a network to the printing apparatus 10, whereby the printing apparatus 10 can prompt the user to confirm the starting page position for re-printing which the printing apparatus 10 has detected and determined.

On the other hand, at the jam recovery user interface section 30, the user may specify a re-print starting position by correcting a re-print starting position determined by the printing apparatus 10 using the page bit image display section 32 and the recovery target page specifying section 33 included in the user interface section. Based on such user actions, the jam recovery user interface section 30 can notify the corrected/ specified re-print starting position to the printing apparatus 10.

Also, even if a paper jam has not been detected during paper transport, paper folds or irregular page order may occur in the printed materials 19 due to a stacking failure or user intervention after the paper transport. In such cases, the present embodiment can display corresponding page bit images by the page bit image display section 32 in response to a scroll direction from the user who then confirms and selects only necessary pages to re-print. In case of the irregular page order, for example, the user can confirm visually and recover its correct order.

If the printing apparatus 10 supports duplex printing, the user can confirm whether to print on the front side or back side by retrieving page bit images to be printed to the page bit image display section 32. Namely, even if no identifiers such as page numbers are printed in the printing operation, which indicate the front and back sides of the printed materials 19, the user can easily confirm the front and back sides by displaying the page bit images in the page bit image display section 32 with the indication of front or back.

As mentioned above, according to the present embodiment, it is possible to recover assuredly from an error such as a paper jam or the like by visually confirming objects to be re-printed on a page basis rather than on a job basis and allowing corrections and/or directions by a user. This enables even a user (printer operator) who does not know the contents of a print job to accurately resume or confirm output operations in the event of a paper jam. Also, in case of mass printing, exact re-printing operations can be directed so that print costs are greatly reduced, including expendable supplies for printers such as toner, amount of paper to be used, operation time, etc. In addition, as an innovative user interface is provided which can immediately confirm the order of printing and print images for the printed materials 19 in detail, personnel costs are also reduced in terms of operations, and user-friendly operations are realized.

### [Advantages of the Invention]

As mentioned above, according to the present invention, the re-printing operation is performed from a desired page upon recovering from an error such as a paper transport failure in the printing apparatus and re-printing.

## Claims

1. A printing apparatus comprising:
means for storing input or expanded bitmapped images with each page thereof being identified;
means for printing said input or expanded bitmapped images on a medium; and
means for reading and displaying the stored bitmapped images based on the page identification in said storing means during or after print operations of said printing means.

2. The printing apparatus according to claim 1, further comprising:
means for detecting a failure of a feed/transport system for the medium printed by said printing means,
wherein said reading means reads and outputs selected bitmapped images based on the page identification for a page that is recognized by said detecting means not to have been printed normally due to the failure of the feed/transport system.

3. The printing apparatus according to claim 1, wherein said storing means stores the bitmapped images with page IDS which identify the bitmapped images by page.

4. The printing apparatus according to claim 1, further comprising:
means for displaying the bitmapped images output by said reading means; and
means for specifying a starting page for printing among the bitmapped images displayed by said displaying means,
wherein said printing means performs printing from a selected page based on the page identification determined by said specifying means.

5. The printing apparatus according to claim 4, further comprising means for stacking the media printed by said printing means, wherein said specifying means specifies a page necessary for recovering a correct order of pages when the order of pages of the media stacked by said stacking means gets out of order.

6. The printing apparatus according to claim 4, wherein said displaying means displays said bit mapped images with indication that the bitmapped image is printed on a front side or back side of a medium, and said specifying means specifies that the printing on the front side or back side of the medium according to the display means is changed.

7. A printing apparatus comprising:
means for expanding input data to bitmapped images;
means for storing the bitmapped images expanded by said expanding means;
means for printing the bitmapped images expanded by said expanding means on a medium;
means for detecting an error occurred when the bitmapped images are printed on said medium by said printing means;
means for reading from said storing means and
displaying selected bitmapped images in response to error detection by said error detecting means; and
means responsive to a request from a user for causing said printing means to print on said medium starting from a specified bitmapped image.

8. The printing apparatus according to claim 7, further comprising:
means for displaying said selected bitmapped images output by said reading means; and
means for specifying a page to resume printing among the bitmapped images displayed by said displaying means,
wherein said causing means resumes printing on the medium by said printing means starting from a specific bitmapped image related to the page specified by said specifying means.

9. The printing apparatus according to claim 7, wherein said error detecting means detects a jam error in said printing means.

10. A print directing apparatus connected to a print section and directing said print section to print, said print section printing bitmapped images on a medium, said apparatus comprising:
means for receiving page bit images for specific pages from said print section along with page identification information identifying each page printed;
means for displaying said page bit images received by said receiving means;
means for specifying a page to be printed in the print section among the page bit images displayed by said displaying means; and
means for outputting the page identification information for said page specified by said specifying means to said print section.

11. The print directing apparatus according to claim 10,
wherein said receiving means receives from said print section the page bit images related to an error occurred in said print section, and said displaying means displays said page bit images related to said error with predetermined error indication.

12. The print directing apparatus according to claim 10, further comprising means for directing scrolling to display pages before or after the page bit images displayed by said displaying means,
said receiving means sequentially receiving the page bit images related to the scrolling direction from said directing means,
said displaying means sequentially displaying the page bit images sequentially received by said receiving means.

13. The print directing apparatus according to claim 10,
wherein said receiving means receives said page identification information and said page bit images from said print section via the Internet.

14. A printing system comprising a printing apparatus for printing on a medium, and a displaying and directing apparatus connected to said printing apparatus for issuing given directions to said printing apparatus, said printing apparatus comprising:
a rasterizer for expanding input print data to bitmapped images;
a memory for storing said bitmapped images expanded by said rasterizer based on page identification information; and
an engine for printing said bitmapped images expanded by said rasterizer on the medium,
said displaying and directing apparatus comprising:
a display for displaying selected bitmapped images output from said printing apparatus; and
a target page specifying section for allowing a user to pecify a particular bitmapped image among said selected bitmapped images displayed and outputting the identification information corresponding to the page of said particular bitmapped image to said printing apparatus.

15. The printing system according to claim 14, wherein said displaying and directing apparatus comprises a scroll directing section for directing page by page scrolling of the bitmapped images displayed on said display, and said display displays selected bitmapped images received from said printing apparatus based on the direction from said scroll directing section.

16. A printing system comprising a printing apparatus for producing page bit images by rasterizing input data, and printing the produced page bit images on a medium, and
a displaying and directing apparatus connected to said printing apparatus for displaying selected images and issuing given directions to said printing apparatus, said printing apparatus storing the rasterized page bit images in a memory, and reading from said memory and outputting to said displaying and directing apparatus selected page bit images upon occurrence of an error, said displaying and directing apparatus displaying selected page bit images output from said printing apparatus, and issuing a re-print direction to said printing apparatus by specifying a particular page bit image among the selected page bit images displayed.

17. A re-printing method comprising the steps of:
storing input or expanded bitmapped images based on page identification information;
printing the input or expanded bitmapped images on a medium;
displaying selected bitmapped images page by page among the stored bitmapped images in response to an error occurred during printing on the medium or a direction from a user;
accepting, on a page basis, a re-print direction from the user for the selected bitmapped images displayed; and
performing re-print processing based on the identification information of the bitmapped image for which the re-print direction has been accepted on a page basis.

18. The re-printing method according to claim 17, wherein the step of displaying the selected bitmapped images page by page indicates whether the image of each page is to be printed on the front side or back side of the medium.
